(19) Europäisches Patentamt
European Patent Office
Office européen des brevets

(11) EP 4 521 484 A1

## (12) EUROPEAN PATENT APPLICATION

(43) Date of publication:
12.03.2025 Bulletin 2025/11

(21) Application number: 23195796.0

(22) Date of filing: 06.09.2023

(51) International Patent Classification (IPC):
H01M 4/131 (2010.01)    H01M 4/505 (2010.01)
H01M 4/525 (2010.01)

(52) Cooperative Patent Classification (CPC):
H01M 4/525; H01M 4/131; H01M 4/505

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(72) Inventors:
• KUMAKURA, Shinichi
2250 Olen (BE)
• MENG, Ying Shirley
Oakland, 94607-5200 (US)
• PARK, Na-ri
Oakland, 94607-5200 (US)
• ZHANG, Minghao
Oakland, 94607-5200 (US)
• LI, Weikang
Oakland, 94607-5200 (US)

(71) Applicants:
• Umicore
1000 Brussels (BE)
• The Regents of The University of California
Oakland, CA 94607 (US)

(74) Representative: Umicore RDI Patent Department
Watertorenstraat 33
2250 Olen (BE)

(54) **METHOD FOR MANUFACTURING A BORON TREATED POSITIVE ELECTRODE ACTIVE MATERIAL**

(57) The present invention relates to a method for manufacturing a boron treated positive electrode active material and the boron treated positive electrode active material obtainable from said method. The present inventors believe that the boron treated positive electrode active material of the invention has a lithium boron oxide compound on the surface of said positive electrode active material. It was demonstrated that the boron treated positive electrode active material of the invention exhibits exceptionally advantageous properties. For example, compared to untreated variants cycling stability is vastly improved, cross-talk phenomena between positive electrode and negative electrode were mitigated even after 1000 cycles and a stable positive electrode electrolyte interface is achieved with mitigated phase change even after long-term cycling.

**Figure 1**

EP 4 521 484 A1

**Description**

**TECHNICAL FIELD**

The present invention generally relates to a method for manufacturing boron treated positive electrode active materials and the boron treated positive electrode active material obtainable from said method. The present invention further relates to a battery comprising said positive electrode active material and the use of said battery.

**BACKGROUND**

Recently, there has been a rapid development of small and lightweight electronic products, electronic devices and communication devices. Similarly, there has been widespread adoption of electric vehicles which have emerged as an environmentally attractive transportation means. These factors have led to a demand for the improved performance of secondary batteries which are used as power sources in said products. Furthermore, lithium secondary batteries have come into the limelight as high-performing batteries due to their high energy density and high reference electrode potential.

The three primary functional components of a lithium-ion battery are the negative electrode (anode), the positive electrode (cathode), and the electrolyte. While many variations exist, the negative electrode of a conventional lithium-ion cell is typically made from carbon or metallic lithium, the positive electrode is typically made from transition metal oxides (in particular oxides of cobalt, nickel and/or manganese), and the electrolyte is typically a non-aqueous solvent containing a lithium salt. For example, mixtures of organic carbonates with lithium hexafluorophosphate are well known liquid electrolytes for lithium-ion batteries.

The demand for electric vehicles (EVs) has increased significantly due to extensive regulations on $CO_2$ emissions and the rising price of gasoline. However, charging electrical vehicles can be inconvenient for customers due to the short mileage per charge and long charging time. To address this issue, many researchers are working on increasing the energy density and fast-charging capability of lithium-ion batteries. For energy density improvement, increasing the operating voltage of positive electrode active material is one of the most effective ways, but challenging. First, regular battery electrolyte suffers severe decomposition during high-voltage operation. Second, positive active materials such as high nickel $LiNi_xCo_yMn_zO_2$ (x+y+z=1, NCM) are unstable when charged to more than 4.5V, resulting in fast capacity decay and safety issues. Third, the choice of transition metal composition of the positive electrode active material is important. Cobalt (Co) is commonly used to improve the stability of positive electrode active materials, but its price has risen significantly in recent years. As a result, high voltage cobalt-free lithium transition metal oxides having a spinel crystal structure such as $LiNi_{0.5}Mn_{1.5}O_4$ have attracted attention. Advantages include their three-dimensional spinel crystal structure for fast charge/discharge, high working potentials (e.g. 4.8 V for $LiNi_{0.5}Mn_{1.5}O_4$), and high theoretical capacities (e.g. 147 mAh/g for $LiNi_{0.5}Mn_{1.5}O_4$). During the charging and/or discharging of the lithium battery, the delithiated positive electrode active material can slowly react with the non-aqueous electrolyte leading to a gradual degradation of the electrochemical performance of lithium-ion batteries using such positive electrode active materials. It has been demonstrated that treatment of the positive electrode active material with metals, such as boron (B), (e.g. applying a thin surface layer of the metal compound on the positive electrode active material resulting in an increased amount of said metals in the surface layer) results in a positive electrode active material exhibiting a higher stability as compared to their counterparts devoid of coating layer.

Du et al (RSC Adv. 2015, 5, 57293-57299) contemplates a wet coating process by treating $LiNi_{0.5}Mn_{1.5}O_2$ powder with a solution of lithium hydroxide and boric acid in ethanol. However, the practical application of such positive electrode active materials is yet to be achieved because the high-voltage operation results in fast capacity decay during cycling.

It is an object of the present invention to provide a method for manufacturing a spinel-type lithium transition metal oxide having improved cycling performance when used as a positive electrode active material in a battery.

It is a further object of the present invention to provide a spinel-type lithium transition metal oxide having improved cycling performance when used as a positive electrode active material in an electrochemical cell.

It is a further object of the present invention to provide a spinel-type lithium transition metal oxide having improved phase stability and/or improved stability of the positive electrode electrolyte interface when used as a positive electrode active material in an electrochemical cell.

It is a further object of the present invention to provide a spinel-type lithium transition metal oxide exhibiting reduced cross-talk phenomena between positive electrode and negative electrode when used as positive electrode active material in an electrochemical cell.

**SUMMARY OF THE INVENTION**

One or more of these objectives can be achieved by employing a solid-state mixing step between a precursor comprising a solid boron oxide source, preferably a solid lithium boron oxide source, and a solid lithium transition metal oxide having a spinel crystal structure. Without wishing to be bound by any theory the present inventors believe that the solid-state mixing step between a precursor comprising a solid boron oxide source, preferably a solid lithium boron oxide source, and a solid lithium transition metal oxide having a spinel crystal structure, affords the boron treated positive electrode active material of the invention comprising a lithium boron oxide compound on the surface of said positive electrode active material.

The present inventors believe that said lithium boron oxide compound on the surface is lithium metaborate $(LiBO_2)$.

As demonstrated in the appended examples, the present inventors have found that the boron treated positive electrode active material of the invention exhibits exceptionally advantageous properties. For example, compared to untreated variants cycling stability is vastly improved, cross-talk phenomena between positive electrode and negative electrode were mitigated even after 1000 cycles and a stable positive electrode electrolyte interface is achieved with mitigated phase change even after long-term cycling.

In a first aspect of the invention there is provided a method for manufacturing a boron treated positive electrode active material comprising a solid-state mixing step between one or more precursors comprising

> a) a solid lithium boron oxide source, and/or
> b) a solid boron oxide source and a first lithium source; and

a positive electrode active material being a solid lithium transition metal oxide having a spinel crystal structure.

In a further aspect of the invention there is provided a boron treated positive electrode active material obtainable by said method.

In a further aspect of the invention there is provided a battery comprising said positive electrode active material.

In a further aspect of the invention there is provided a use of said battery in an electric vehicle.

## BRIEF DESCRIPTION OF THE FIGURES

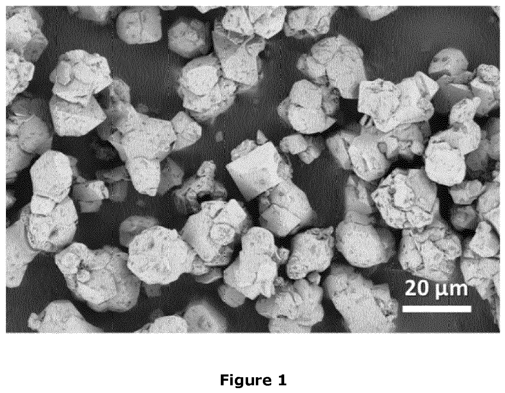

Figure 1: SEM image of EX1

Figure 2: STEM-EELS mapping of EX1

Figure 3: (a) full cells cycling performances wherein solid circles represent capacity values and open circles represent columbic efficiency values; (b) the corresponding average charge/discharge voltage; (c) the charge/discharge profiles of different cycles from LNMO cells and (d) the charge/discharge profiles of different cycles from the boron treated LNMO

## DETAILED DESCRIPTION

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

The expression "positive electrode active material" as used herein is also interchangeably referred to as "cathode active material". As will be understood by the skilled person, the positive electrode polarity can be positive or negative depending on the mode of operation of an electrochemical cell comprising the positive electrode active material. The term "a cathode active material" or "a positive electrode active material as used herein is defined as a material which is electrochemically active in a positive electrode or a cathode. By active material, it must be understood to be a material capable to capture and release Li ions when subjected to a voltage change over a predetermined period of time.

*Method for manufacturing*

In a first aspect of the invention there is provided a method for manufacturing a boron treated positive electrode active material, comprising the steps of:

-    Step 1) providing one or more precursors comprising

        a) a solid lithium boron oxide source, and/or
        b) a solid boron oxide source and a first lithium source;

-    Step 2) providing a positive electrode active material being a solid lithium transition metal oxide having a spinel crystal structure;

-    Step 3) solid-state mixing the one or more precursors of step 1) with the positive electrode active material of step 2);

-    Step 4) heating the mixture obtained in step 3) to obtain the boron treated positive electrode active material.

A highly preferred embodiment is the method of the invention comprising the steps of

-    Step 1) providing one or more precursors comprising a solid lithium boron oxide source;

-    Step 2) providing a positive electrode active material being a solid lithium transition metal oxide having a spinel crystal structure;

-    Step 3) solid-state mixing the one or more precursors of step 1) with the positive electrode active material of step 2);

-    Step 4) heating the mixture obtained in step 3) to obtain the boron treated positive electrode active material.

The present inventors believe that the method of the invention affords a lithium transition metal oxide having a spinel crystal structure having a lithium boron oxide based compound on the surface of the lithium transition metal oxide, preferably the lithium boron oxide compound is lithium metaborate ($LiBO_2$).

It was found that the most facile way to obtain a lithium boron oxide compound on the surface of the lithium transition metal oxide is by simply pre-synthesizing (or purchasing) lithium metaborate, such that the lithium metaborate can be provided in step 1) for treating the lithium transition metal oxide. Hence, in this embodiment of the method the solid lithium boron oxide source comprises lithium metaborate, preferably the solid lithium boron oxide source is lithium metaborate.

However, lithium metaborate may also be prepared in-situ (during the treatment process) by providing a solid boron oxide source and a solid lithium source. As will be understood by the skilled person, the identity of the lithium boron oxide on the surface obtained will be influenced, amongst others, by the ratio of lithium to boron provided during the preparation of the surface treatment. The present inventors have found that, depending on the lithium transition metal oxide source used, residual reactive lithium on the surface of the lithium transition metal oxide may provide some, or even all of the lithium necessary to react with boron oxide to form the lithium boron oxide compound, in particular lithium metaborate. Thus, if a solid boron oxide source is provided in step 1), the amount of solid lithium source to be provided in step 1) will depend on the amount of reactive lithium already present on the surface of the lithium transition metal oxide. It is within the skilled person's routine capabilities to determine the appropriate amount for the lithium transition metal oxide source being used. In some embodiments of the invention, no lithium source is provided in step 1). Consequently, all of the lithium in the lithium boron oxide compound on the surface will originate from reactive lithium already present on the lithium transition metal oxide. Reactive lithium is any form of lithium which forms a lithium boron oxide upon contacting boric acid, such as lithium hydroxide.

In a preferred embodiment the a boron treated positive electrode active material is a powder.

The solid boron oxide source may be $B_2O_3$, $H_3BO_3$, $B_2O_5$, and $Na_2B_4O_7$. In preferred embodiments of the invention, the boron oxide source is boric acid ($H_3BO_3$).

The first lithium source may be LiOH, $LiOH.H_2O$, $Li_2CO_3$, $LiHCO_3$, and $Li_2O$. In preferred embodiments of the invention, the first lithium source is lithium hydroxide (LiOH or $LiOH.H_2O$).

In a preferred embodiment the one or more precursors are a powder.

In a preferred embodiment the positive electrode active material of step 2) is a powder.

The lithium transition metal oxide having a spinel crystal structure is preferably a lithium manganese-containing oxide such as the lithium manganese-containing oxide represented by formula (I)

$$Li_{1+a}Mn_{2-x-z}M^1_xM^2_zO_4 \qquad (I)$$

wherein

$M^1$ is one or more elements selected from the group consisting of Ni, Co, Fe and Al;
$M^2$ is one or more elements selected from the group consisting of Na, Mg, Al, P, K, Ca, Ti, V, Cr, Cu, Ga, Y, Zr, Nb, Mo, In, Ta, W, Re and Ce; and
$0 \leq a \leq 0.2$, $0 \leq x \leq 1$ and $0 \leq z \leq 0.5$.

$M^1$ is preferably selected from the group consisting of Ni, Fe and Al, more preferably $M^1$ is Ni. In preferred embodiments of the invention, the lithium manganese-containing oxide is represented by formula (I) wherein

- $0 \leq a \leq 0.1$, preferably $0 \leq a \leq 0.01$, more preferably $0 \leq a \leq 0.001$;
- $0.1 \leq x \leq 0.9$, preferably $0.3 \leq x \leq 0.7$, more preferably $0.45 \leq x \leq 0.55$; and/or
- $0 \leq z \leq 0.25$, preferably $0 \leq z \leq 0.1$, more preferably $0 \leq z \leq 0.01$.

In some embodiments of the invention, the lithium manganese-containing oxide is represented by formula (I) wherein

- $0 \leq a \leq 0.1$, preferably $0 \leq a \leq 0.01$, more preferably $0 \leq a \leq 0.001$;
- $0.3 \leq x \leq 0.7$, more preferably $0.45 \leq x \leq 0.55$; and
- $0 \leq z \leq 0.25$, preferably $0 \leq z \leq 0.1$, more preferably $0 \leq z \leq 0.01$.

In some embodiments of the invention, the lithium manganese-containing oxide is represented by formula (I) wherein

- $M^1$ is selected from the group consisting of Ni, Fe and Al, preferably $M^1$ is Ni;
- $0 \leq a \leq 0.1$, preferably $0 \leq a \leq 0.01$, more preferably $0 \leq a \leq 0.001$;
- $0.3 \leq x \leq 0.7$, more preferably $0.45 \leq x \leq 0.55$; and
- $0 \leq z \leq 0.25$, preferably $0 \leq z \leq 0.1$, more preferably $0 \leq z \leq 0.01$.

In some embodiments of the invention, the lithium manganese-containing oxide is represented by formula (I) wherein

- $M^1$ is selected from the group consisting of Ni, Fe and Al, preferably $M^1$ is Ni;
- $0 \leq a \leq 0.1$, preferably $0 \leq a \leq 0.01$, more preferably $0 \leq a \leq 0.001$;
- $0.3 \leq x \leq 0.7$, more preferably $0.45 \leq x \leq 0.55$; and
- $0 \leq z \leq 0.01$, preferably z = 0.

In highly preferred embodiments of the invention, the lithium manganese-containing oxide is represented by formula (I) wherein

- $M^1$ is Ni
- $0 \leq a \leq 0.1$, preferably $0 \leq a \leq 0.01$, more preferably $0 \leq a \leq 0.001$;
- $0.3 \leq x \leq 0.7$, preferably $0.45 \leq x \leq 0.55$, more preferably $0.49 \leq x \leq 0.51$; and/or
- $0 \leq z \leq 0.01$, preferably z = 0.

In the most preferred embodiments of the invention, the lithium manganese-containing oxide is represented by formula (I) wherein

- $M^1$ is Ni
- $0 \leq a \leq 0.1$, preferably $0 \leq a \leq 0.01$, more preferably $0 \leq a \leq 0.001$;
- $0.3 \leq x \leq 0.7$, preferably $0.45 \leq x \leq 0.55$, more preferably $0.49 \leq x \leq 0.51$; and
- $0 \leq z \leq 0.01$, preferably z = 0.

In some embodiments of the invention, the lithium manganese-containing oxide is represented by formula (I) wherein a = 0.

In some embodiments of the invention, the lithium manganese-containing oxide is represented by formula (I) wherein z = 0.

In some embodiments of the invention, the lithium manganese-containing oxide is $LiNi_{0.5}Mn_{1.5}O_4$.

The parameters a, x, z and a as referred to herein in the context of the composition of the positive electrode active material, can be determined by Inductively coupled plasma - mass spectrometry (ICP-MS) or Inductively Coupled Plasma Optical Emission Spectrometry (ICP-OES), preferably by Inductively coupled plasma - mass spectrometry (ICP-MS).

In a preferred embodiment the solid lithium transition metal oxide having a spinel crystal structure is a powder comprising particles, wherein the particles consist of only one primary particle or at most twenty primary particles as observed in a SEM image. Preferably, at least 30% of the particles, more preferably at least 50% of the particles, constituting the powder observed in a SEM image consists of only one primary particle or at most twenty primary particles. The number of primary particles constituting the particles are determined in a field of view of at least 45 $\mu$m x at least 60 $\mu$m (i.e. of at least 2700 $\mu$m$^2$), preferably of: at least 100 $\mu$m x 100 $\mu$m (i.e. of at least 10,000 $\mu$m$^2$. The particles in the image should be well distributed therefore avoiding overlap between particles. This can be achieved by pouring a small amount of powder sample to the adhesive attached on the SEM sample holder and blowing air to remove the excess powder.

The order of addition of the ingredients to be mixed in mixing step 3) is not particularly limited. Step 3) may comprise a first step of mixing a subset of the components provided in steps 1) and/or 2), followed by addition of the remaining components provided in steps 1) and/or 2). The mixing of step 3) may take place using any suitable means known to the skilled person, such as simple pestle and mortar, shaft mixers, ribbon mixers, rotary drums, ploughshare mixers, paddle mixers, conical screw mixers, etc. Step 3) may also comprise a size reduction or comminution of one or more of the precursors provided in step 1) or 2), for example using ball milling, hammer milling, pin milling, etc.

In accordance with preferred embodiments of the invention, the mixing of step 3) is solid-state mixing. Solid-state mixing as used herein means that all components being mixed are in solid form. Consequently there is no slurry, suspension or solution being mixed. While it is not excluded that a small amount of a solvent or lubricating additive may be added for solid-state mixing, the amount should be so low that at most surface wetting of the dry materials being mixed takes place, and no slurry, suspension or solution is formed. It is particularly preferred that the solid-state mixing of step 3) occurs substantially free of any added alcohols or water, preferably substantially free of any added solvent. As the skilled person will understand, water of hydration which may be comprised in one of the components being drymixed is not considered added water. Preferably, the solid-state mixing of the one or more precursors of step 1) with the positive electrode active material of step 2) is between 1 minutes and 1 hour, more preferably between 2 minutes and 30 minutes, most preferably between 5 minutes and 15 minutes. Preferably, the solid-state mixing of the one or more precursors of step 1) with the positive electrode active material of step 2) is at between 10 rpm and 10,000 rpm, more preferably between 100 and 5,000 rpm, most preferably between 1,000 and 3,000 ppm.

The total amount of the one or more precursors and the solid lithium transition metal oxide mixed in step 3) is preferably more than 95 wt.% of the total composition mixed in step 3), more preferably more than 98 wt.%, more preferably more than 99 wt.%. In preferred embodiments of the invention, the total composition mixed in step 3) consists essentially of the one or more precursors and the solid lithium transition metal oxide.

The total amount of the one or more precursors mixed in step 3) is preferably at least 0.1 wt.% (by total weight of the solid lithium transition metal oxide mixed in step 3)), preferably at least 0.5 wt.% (by total weight of the solid lithium transition metal oxide mixed in step 3)), more preferably at least 1 wt.% (by total weight of the solid lithium transition metal oxide mixed in step 3)). The total amount of the one or more precursors mixed in step 3) is preferably 0.1-10 wt.% (by total weight of the solid lithium transition metal oxide mixed in step 3)), preferably 0.5-5 wt.% (by total weight of the solid lithium transition metal oxide mixed in step 3)), more preferably 1-3 wt.% (by total weight of the solid lithium transition metal oxide mixed in step 3)).

In particularly preferred embodiments of the invention there is provided a method for manufacturing a boron treated positive electrode active material, comprising the steps of:

Step 1) providing solid lithium metaborate;
Step 2) providing a solid lithium transition metal oxide having a spinel crystal structure;
Step 3) solid-state mixing the lithium metaborate of step 1) with the lithium transition metal oxide having a spinel crystal structure of step 2);
Step 4) heating the mixture obtained in step 3).

The heating step 4) is performed at a temperature of at least 200 °C, preferably at least 400 °C, more preferably at least 500 °C. The heating step 4) is performed at a temperature of at most 800 °C, preferably at most 700 °C, more preferably at most 600 °C. A highly preferred temperature with a view to achieving a uniform surface treatment is in the range of 550-650 °C, such as in the range of 580-620 °C. The total time the mixture obtained in step 3) is submitted to the temperature is preferably at least 5 minutes, at least 10 minutes or at least 30 minutes, such as within the range of 5 minutes to 48 hours, preferably within the range of 10 minutes to 24 hours, more preferably within the range of 30 minutes to 20 hours. A highly preferred time the mixture obtained in step 3) was submitted to the temperature with a view to achieving a uniform surface treatment is in the range of 7-13 hours, preferably in the range of 8.5-11.5 hours. It is preferred that the heating of step 4) takes place under inert atmosphere or air, preferably air.

After the heating of step 4), a particle-size reduction step may take place in order to reduce the amount and/or size of agglomerates formed during heating.

In a more preferred embodiment of the method, step 1) further comprises the steps of

○ providing a second lithium source and a further boron source,
○ mixing a polymer, a first alcohol, the second lithium source and the further boron source to obtain a liquid mixture,
○ heating said liquid mixture at a temperature of at least 40 °C and at most 100 °C, preferably of at least 50°C and at most 90 °C, more preferably of at least 75 °C and 85 °C, most preferably about 80 °C, to obtain an intermediate product,
○ optionally washing the obtained intermediate product with a second alcohol to obtain a washed product,
○ drying and grinding the intermediate product or the washed product to obtain the solid lithium boron oxide source.

Thus as appreciated by the skilled person the solid lithium boron oxide source obtained by afore-mentioned method is the solid lithium boron oxide source provided in step 1) of the method of the invention.

The further boron source may be $B_2O_3$, $H_3BO_3$, $B_2O_5$, and $Na_2B_4O_7$. In preferred embodiments of the invention, the further boron source is boric acid ($H_3BO_3$).

The second lithium source may be LiOH, $LiOH \cdot H_2O$, $Li_2CO_3$, $LiHCO_3$, and $Li_2O$. In preferred embodiments of the invention, the second lithium source is lithium hydroxide (LiOH or $LiOH.H_2O$).

The polymer may be any polymer suitable to dissolve in the first alcohol to obtain the liquid mixture. Suitable polymers are polyethylene glycol, hydroxypropyl methylcellulose, polyvinyl alcohol, polyacrylic acid, polyacrylamides, polyacrylic acid copolymer, sodium carboxymethylcellulose, polyethylene oxide, polyvinyl acetate, polyvinyl alcohol-acetal, polyvinylpyrrolidone or polyoxyethylene-polyoxypropylene block copolymers. In a preferred embodiment of the invention the polymer is polyvinylpyrrolidone. The polymer, in particular the polyvinylpyrrolidone, suitable for the method of the invention may have any molecular weight. For example, but not limiting to the invention, the polyvinylpyrrolidone may have a weight average molecular weight ($M_w$) between 1,000 and 1,000,000 g/mol, preferably between 10,000 and 500,000 g/mol, more preferably between 25,000 and 100,000 g/mol, most preferably about 50,000 g/mol. Such polymers are commercially available.

The first alcohol may be any alcohol suitable to dissolve the polymer to obtain the liquid mixture. The first alcohol may be an alcohol, such a methanol, ethanol, propanol, butanol or a glycol, such as ethylene glycol, propylene glycol, buthelyene glycol or $HO(CH_2CH_2O)_nCH_2CH_2OH$ with n is an integer from 1 to 10, preferably n is an integer from 2 to 8, more preferably n is an integer from 2 to 5, most preferably n is 3. In preferred embodiment of the invention the first alcohol is a glycol, preferably tetraethylene glycol ($HO(CH_2CH_2O)_3CH_2CH_2OH$).

The molar concentration (mol/L or M) of the polymer in the first alcohol is between 0.01 and 1 M, preferably between 0.1 and 0.8 M, more preferably between 0.2 and 0.4 M, most preferably about 0.3 M.

The second alcohol may be an alcohol, such a methanol, ethanol, propanol, butanol or a glycol, such as ethylene glycol, propylene glycol, buthelyene glycol or $HO(CH_2CH_2O)_nCH_2CH_2OH$ with n is an integer from 1 to 10, preferably n is an integer from 2 to 8, more preferably n is an integer from 2 to 5, most preferably n is 3. In preferred embodiment of the invention the second alcohol is an alcohol, preferably ethanol.

In a preferred embodiment of the method is the first alcohol different from the second alcohol.

In a preferred embodiment of the method, the molar ratio (mol/mol) of the amount of boron in the further boron source and the amount of lithium in the second lithium source is between 5:1 to 1:5, preferably between 3:1 to 1:3, more preferably between 2:1 to 1:2, most preferably about 1:1.

*Product-by-process*

In a further aspect of the invention there is provided a boron treated positive electrode active material obtainable by the method according to the invention.

Preferably said boron treated positive electrode active material is obtainable by the method comprising the steps of:

- Step 1) providing one or more precursors comprising a solid lithium boron oxide source, comprising the steps of

○ providing the second lithium source as described herein and the further boron source as described herein,
○ mixing the polymer as described herein, the first alcohol as described herein, the second lithium source as described herein and the further boron source as described herein to obtain a liquid mixture,

∘ heating said liquid mixture at a temperature of at least 40 °C and at most 100 °C to obtain an intermediate product,
∘ optionally washing the obtained intermediate product with the second alcohol as described herein to obtain a washed product,
∘ drying and grinding the intermediate product or the washed product to obtain the solid lithium boron oxide source;

- Step 2) providing the positive electrode active material being a solid lithium transition metal oxide having a spinel crystal structure as described herein;

- Step 3) solid-state mixing the one or more precursors of step 1) with the positive electrode active material of step 2) as described herein;

- Step 4) heating the mixture obtained in step 3) as described herein to obtain the boron treated positive electrode active material.

In a preferred embodiment the boron treated positive electrode active material obtainable by the method according to the invention has a spinel crystal structure.

In a preferred embodiment said boron treated positive electrode active material obtainable by the method according to the invention comprises lithium, M', and oxygen, wherein M' comprises:

- Ni in a content x', wherein $5.0 \leq x' < 60.0$ at%, relative to M',
- Mn in a content y', wherein $20.0 \leq y' \leq 90.0$ at%, relative to M',
- B in a content z', wherein $0.0 < z' \leq 10.0$ at%, relative to M',
- D in a content d', wherein $0.0 \leq d' \leq 2.0$ at%, relative to M', wherein D is at least one element selected from the group consisting of Al, Ba, Ca, Ce, Co, Cr, Fe, La, Mg, Mo, Nb, S, Sr, Ti, V, W, Y, Zn, and Zr;
- wherein x', y', z', and d' are measured by ICP-MS; and
- wherein x'+y'+z'+d' is 100.0 at%.

As appreciated by the skilled person the amounts of x', y', z' and d' in the positive electrode active material are measured by Inductively coupled plasma - mass spectrometry (ICP-MS) or Inductively Coupled Plasma Optical Emission Spectrometry (ICP-OES), preferably by Inductively coupled plasma - mass spectrometry (ICP-MS).

In a more preferred embodiment Ni is in a content x', wherein $10.0 \leq x' \leq 60.0$ at%, relative to M', preferably wherein $15.0 \leq x' \leq 50.0$ at%, relative to M', more preferably wherein $20.0 \leq x' \leq 40.0$ at%, relative to M'.

In a more preferred embodiment Mn is in a content y', wherein $30.0 \leq y' \leq 85.0$ at%, relative to M', preferably wherein $50.0 \leq y' \leq 80.0$ at%, relative to M', more preferably wherein $60.0 \leq y' \leq 78.0$ at%, relative to M'.

In a more preferred embodiment B is in a content b', wherein $0 \leq b' \leq 8.0$ at%, relative to M', preferably wherein $0.1 \leq b' \leq 5.0$ at%, relative to M', more preferably wherein $0.5 \leq b' \leq 1.0$ at%, relative to M'.

In a highly preferred embodiment D is at least one element selected from the group consisting of Al, Zr, Cr, Nb, S, Si, Ti, Y, W, preferably Al, Zr, and W.

A preferred embodiment is the boron treated positive electrode active material obtainable by the method according to the invention having a Li/M' ratio (mol/mol), preferably a Li(Ni+Mn) ratio, > 0.90, preferably > 0.92, more preferably > 0.95. A preferred embodiment is the boron treated positive electrode active material obtainable by the method according to the invention having a Li/M' ratio, preferably a Li/(Ni+Mn) ratio, < 1.10, preferably < 1.08, more preferably < 1.05. A preferred embodiment is the boron treated positive electrode active material obtainable by the method according to the invention having a Li/M' ratio, preferably a Li/(Ni+Mn) ratio, in the range of 0.90 -1.10, preferably in the range of 0.92 - 1.08, more preferably in the range of 0.95 - 1.05.even more preferably in the range of 0.99 - 1.01, most preferably about 1.00

In a certain preferred embodiment said boron treated positive electrode active material obtainable by the method according to the invention has a lithium boron oxide compound, in particular lithium metaborate, on the surface of the solid lithium transition metal oxide.

A certain preferred embodiment concerns said boron treated positive electrode active material obtainable by the method according to the invention,

wherein said boron treated positive electrode active material obtainable by the method according to the invention has a boron content $B_B$, wherein $B_B$ is expressed as molar fraction B relative to the total amount of Ni, Mn and B, as measured by XPS analysis,
wherein said boron treated positive electrode active material obtainable by the method according to the invention has a boron content $B_A$, defined as z'/(x'+y'+z'),

wherein the ratio $B_B/B_A$, > 30.

A certain more preferred embodiments concerns said boron treated positive electrode active material obtainable by the method according to the invention,
wherein the ratio $B_B/B_A$ > 35, preferably the ratio $B_B/B_A$ > 40, more preferably the ratio $B_B/B_A$ > 45.
A certain more preferred embodiments concerns said boron treated positive electrode active material obtainable by the method according to the invention,
wherein the ratio $B_B/B_A$ < 90, preferably the ratio $B_B/B_A$ <70, more preferably the ratio $B_B/B_A$ < 55.
A certain more preferred embodiments concerns said boron treated positive electrode active material obtainable by the method according to the invention,
wherein the ratio $B_B/B_A$ is in the range of 35 to 90, preferably the ratio $B_B/B_A$ is in the range of 40 to 70, more preferably the ratio $B_B/B_A$ is in the range 45 to 55.
In the context of the present invention X-ray photoelectron spectroscopy (XPS) analysis was performed using a Kratos AXIS Supra. The XPS is operated using an Al anode source at 15 kV with a $10^{-8}$ Torr vacuum level. All XPS measurements are collected using an auto-neutralizer during acquisition. Survey scans are collected with a 1.0 eV step size, followed by high-resolution scans with a step size of 0.1 eV. All the data are calibrated using a C 1s peak at 284.8 eV. The sample transfer process is air-tight to avoid any possible degradation. Curve fitting is done with CasaXPS Version2.3.19PR1.0 using a Shirley-type background treatment and Scofield sensitivity factors. Line shape GL(30) is the Gaussian/Lorentzian product formula with 70% Gaussian line and 30% Lorentzian line.
In a more preferred embodiment said boron treated positive electrode active material obtainable by the method according to the invention, preferably having a spinel crystal structure is represented by formula (II)

$$Li_{1+a''}Mn_{2-x''-z''-b''}M^3_{x''}M^4_{z''}B_{b''}O_4 \qquad \text{(II)}$$

wherein

M$^3$ is one or more elements selected from the group consisting of Ni, Co, Fe and Al;
M$^4$ is one or more elements selected from the group consisting of Na, Mg, Al, P, K, Ca, Ti, V, Cr, Cu, Ga, Y, Zr, Nb, Mo, In, Ta, W, Re and Ce;
$0 \leq a'' \leq 0.2$, $0 \leq x'' \leq 1$, $0 \leq z'' \leq 0.5$ and $0 < b'' \leq 0.01$.

M$^3$ is preferably selected from the group consisting of Ni, Fe and Al, more preferably M$^3$ is Ni. In preferred embodiments of the invention, said boron treated positive electrode active material obtainable by the method according to the invention is represented by formula (II) wherein

- $0 \leq a'' \leq 0.1$, preferably $0 \leq a'' \leq 0.01$, more preferably $0 \leq a'' \leq 0.001$;
- $0.1 \leq x'' \leq 0.9$, preferably $0.3 \leq x'' \leq 0.8$, more preferably $0.45 \leq x'' \leq 0.75$;
- $0 \leq z'' \leq 0.25$, preferably $0 \leq z'' \leq 0.1$, more preferably $0 \leq z'' \leq 0.01$ and/or
- $0 < b'' \leq 0.01$, preferably $0.001 \leq b'' \leq 0.05$, more preferably $0.005 \leq b'' \leq 0.01$.

In some embodiments of the invention, said boron treated positive electrode active material obtainable by the method according to the invention is represented by formula (II) wherein

- $0 \leq a'' \leq 0.1$, preferably $0 \leq a'' \leq 0.01$, more preferably $0 \leq a'' \leq 0.001$;
- $0.3 \leq x'' \leq 0.8$, preferably $0.45 \leq x'' \leq 0.75$;
- $0 \leq z'' \leq 0.25$, preferably $0 \leq z'' \leq 0.1$, more preferably $0 \leq z'' \leq 0.01$ and
- $0 < b'' \leq 0.01$, preferably $0.001 \leq b'' \leq 0.05$, more preferably $0.005 \leq b'' \leq 0.01$.

In some embodiments of the invention, said boron treated positive electrode active material obtainable by the method according to the invention is represented by formula (II) wherein

- M$^3$ is selected from the group consisting of Ni, Fe and Al, preferably M$^3$ is Ni;
- $0 \leq a'' \leq 0.1$, preferably $0 \leq a'' \leq 0.01$, more preferably $0 \leq a'' \leq 0.001$;
- $0.3 \leq x'' \leq 0.8$, more preferably $0.45 \leq x'' \leq 0.75$
- $0 \leq z'' \leq 0.25$, preferably $0 \leq z'' \leq 0.1$, more preferably $0 \leq z'' \leq 0.01$ and
- $0 < b'' \leq 0.01$, preferably $0.001 \leq b'' \leq 0.05$, more preferably $0.005 \leq b'' \leq 0.01$.

In some embodiments of the invention, said boron treated positive electrode active material obtainable by the method according to the invention is represented by formula (II) wherein

- $M^3$ is selected from the group consisting of Ni, Fe and Al, preferably $M^3$ is Ni;
- $0 \leq a'' \leq 0.1$, preferably $0 \leq a'' \leq 0.01$, more preferably $0 \leq a'' \leq 0.001$;
- $0.3 \leq x'' \leq 0.8$, more preferably $0.45 \leq x'' \leq 0.75$;
- $0 \leq z'' \leq 0.01$, preferably $z'' = 0$ and
- $0.001 \leq b'' \leq 0.05$, preferably $0.005 \leq b'' \leq 0.01$.

In highly preferred embodiments of the invention, said boron treated positive electrode active material obtainable by the method according to the invention is represented by formula (II) wherein

- $M^3$ is Ni;
- $0 \leq a'' \leq 0.1$, preferably $0 \leq a'' \leq 0.01$, more preferably $0 \leq a'' \leq 0.001$;
- $0.3 \leq x'' \leq 0.8$, more preferably $0.45 \leq x'' \leq 0.75$;
- $0 \leq z'' \leq 0.01$, preferably $z'' = 0$; and/or
- $0.001 \leq b'' \leq 0.05$, preferably $0.005 \leq b'' \leq 0.01$.

In the most preferred embodiments of the invention, said boron treated positive electrode active material obtainable by the method according to the invention is represented by formula (II) wherein

- $M^3$ is Ni
- $0 \leq a'' \leq 0.1$, preferably $0 \leq a'' \leq 0.01$, more preferably $0 \leq a'' \leq 0.001$;
- $0.3 \leq x'' \leq 0.8$, more preferably $0.45 \leq x'' \leq 0.75$, most preferably $0.45 \leq x'' \leq 0.55$ or $0.70 \leq x'' \leq 0.75$;
- $0 \leq z'' \leq 0.01$, preferably $z'' = 0$; and
- $0.001 \leq b'' \leq 0.05$, preferably $0.005 \leq b'' \leq 0.01$.

In some embodiments of the invention, said boron treated positive electrode active material obtainable by the method according to the invention is represented by formula (II) wherein a = 0.

In some embodiments of the invention, said boron treated positive electrode active material obtainable by the method according to the invention is represented by formula (II) wherein z = 0.

As appreciated by the skilled person the amounts of a", x", z" and b" said positive electrode active material are measured by Inductively coupled plasma - mass spectrometry (ICP-MS) or Inductively Coupled Plasma Optical Emission Spectrometry (ICP-OES), preferably by Inductively coupled plasma - mass spectrometry (ICP-MS).

In a preferred embodiment said boron treated positive electrode active material obtainable by the method according to the invention, preferably having a spinel crystal structure, is a powder comprising particles, wherein the particles consist of only one primary particle or at most twenty primary particles as observed in a SEM image. Preferably, at least 30% of the particles, more preferably at least 50% of the particles, observed in a SEM image consists of only one primary particle or at most twenty primary particles. The number of primary particles constituting the particles are determined in a field of view of at least 45 $\mu$m x at least 60 $\mu$m (i.e. of at least 2700 $\mu$m$^2$), preferably of: at least 100 $\mu$m x 100 $\mu$m (i.e. of at least 10,000 $\mu$m$^2$. The particles in the image should be well distributed therefore avoiding overlap between particles. This can be achieved by pouring a small amount of powder sample to the adhesive attached on the SEM sample holder and blowing air to remove the excess powder.

*Battery*

In a third aspect the invention concerns a battery comprising said boron treated positive electrode active obtainable by the method according to the invention.

In a preferred embodiment the battery may comprise a liquid electrolyte, such as a lithium salt in an organic solvent. A suitable example is LiPF6 in ethylene carbonate (EC) and/or ethyl methyl carbonate (EMC), such as 1M LiPF$_6$ in EC: EMC = 3:7 (vol%).

Preferably, the battery further comprises an anode comprising anode active material. Suitable electrochemically active anode materials are those known in the art. For example, the anode may comprise graphitic carbon, or a metal alloy comprising lithium. Preferably the anode comprises graphitic carbon.

In a preferred embodiment the battery according to the invention has an efficiency of at least 80%, preferably at least 82%, more preferably at least 84%, most preferably at least 85%.

In a preferred embodiment the battery according to the invention has first discharge capacity of at least 100.0 mAh/g, preferably of at least 110.0 mAh/g, more preferably of at least 115.0 mAh/g.

As appreciated by the skilled person the electrochemical performances, such as efficiency and first discharge capacity, of all the cells are tested at room temperature either by Neware Battery Test System (Neware Technology Ltd., China) or Arbin BT2000 instruments (Arbin instrument, USA). Voltage range is 3.3 - 4.85 V.

*Use*

In a fourth aspect the present invention concerns a use of the boron treated positive electrode active material obtainable by the method according the invention in a battery.

A preferred embodiment is the use of the boron treated positive electrode active material obtainable by the method according the invention in a battery, to increase the efficiency of the battery and/or to increase the first discharge capacity of said battery.

In a fifth aspect the present invention concerns a use of the battery according to the invention in either one of a portable computer, a tablet, a mobile phone, an energy storage system, an electric vehicle or in a hybrid electric vehicle, preferably in an electric vehicle or in a hybrid electric vehicle.

## EXAMPLES

### Experimental tests used in the examples

The following analysis methods are used in the Examples:

### A) Inductively coupled plasma - mass spectrometry (ICP-MS)

The contents of the elements in the positive electrode active material example and comparative example as describe herein below are measured by the ICP-MS analysis using Thermo iCAP RQ ICP-MS. 0.2 grams of a powder sample is dissolved into 2 mL high-purity hydrochloric acid in a glass vial overnight in the fume hood. Afterward, the vial is filled with 17mL DI water, followed by complete homogenization. 18 μL is taken out by pipette and transferred into a 15mL polypropylene centrifuge tube for the second dilution, where the centrifuge tube is filled with 11 mL of the matrix solution and then homogenized. Finally, this solution is used for the measurement.

### B) XPS

XPS analysis was performed using a Kratos AXIS Supra. The XPS is operated using an Al anode source at 15 kV with a $10^{-8}$ Torr vacuum level. All XPS measurements are collected using an auto-neutralizer during acquisition. Survey scans are collected with a 1.0 eV step size, followed by high-resolution scans with a step size of 0.1 eV. All the data are calibrated using a C 1s peak at 284.8 eV. The sample transfer process is air-tight to avoid any possible degradation.

Curve fitting is done with CasaXPS Version2.3.19PR1.0 using a Shirley-type background treatment and Scofield sensitivity factors. The fitting parameters are according to Table 1a. Line shape GL(30) is the Gaussian/Lorentzian product formula with 70% Gaussian line and 30% Lorentzian line.

Table 1a. XPS fitting parameter for Ni2p3, Mn2p3, Co2p3, B1s, and Si1p.

| Element | Sensitivity factor | Fitting range (eV) | Defined peak(s) | Line shape |
|---------|--------------------|--------------------|-----------------|------------|
| Ni | 14.61 | 851.4±0.1-869.4 ±0.1 | Ni2p3 peak1, Ni2p3 peak2, Ni2p3 peak1 satellite, Ni2p3 peak2 satellite | GL(30) |
| Mn | 9.17 | 639.1±0.1-649.7 ±0.1 | Mn2p3, Mn2p3 satellite | GL(30) |
| B | 0.486 | 187.4±0.1-195.6 ±0.1 | B1s | (GL30) |

For Ni and Co peak, constraints are set for each defined peak according to Table 1b.

Table 1b. XPS fitting constraints for Ni and Co peak fitting.

| Element | Defined peak | Fitting range (eV) | FWHM (eV) | Area |
|---------|--------------|--------------------|-----------|------|
| Mn | Mn2p3 peak 1 | 641.0-644.0 | 0.5-4.0 | No constraint set |
| | Mn2p3 satellite | 644.0-647.0 | 0.5-4.0 | 40% of Mn2p3 peak |

(continued)

| Element | Defined peak | Fitting range (eV) | FWHM (eV) | Area |
|---|---|---|---|---|
| Ni | Ni2p3 peak1 | 854.45-854.75 | 0.5-4.0 | No constraint set |
| | Ni2p3 peak2 | 856.15-856.45 | Equal to FWHM of Ni2p3 peak 1 | No constraint set |
| | Ni2p3 peak1 satellite | 863.7-864.3 | 0.5-4.0 | No constraint set |
| | Ni2p3 peak2 satellite | 860.5-860.9 | Equal to FWHM of Ni2p3 peak 1 satellite | No constraint set |

The B surface contents as determined by XPS are expressed as atomic fractions of B in the surface layer of the particles divided by the total content of Ni, Mn, and B in said surface layer. It is calculated as follows:

$$atomic\ ratio\ of\ B\ to\ Ni, Mn, and\ B\ by\ XPS = B_B = \frac{B\ (at.\%)}{Ni + Mn + B(at.\%)}$$

**C) Coin cell**

**C1) Electrode preparation**

To evaluate the electrochemical performance, electrodes using EX1 and CEX1 are prepared. SPC65 (carbon black, TIMCAL Ltd.) is used as the conductive agent and HSV900 (PVDF, Arkema Inc.) as the binder in a mass ratio of 90:5:5 with a cathode loading of 3 mAh/cm$^2$. The mix is then well dissolved in a proper amount of N-methyl-2-pyrrolidone (NMP, $\geq$ 99%, Sigma-Aldrich) and mixed with a Thinky Mixer to form the slurry. The slurry is cast onto Al foil and dried at 80 °C in a vacuum oven overnight, followed by 1 h of 120 °C drying at elevated temperature. The electrode is punched into cathode discs with a 12.7 mm diameter and a loading of active mass around 24 mg/cm$^2$.

**C2) Electrode assembly**

CR2032 are assembled using graphite electrode provided by Ningbo Institute of Materials Technology & Engineering (NIMTE) with an active mass ratio of 94%. The graphite electrode is punched into anode discs with a 13 mm diameter, and the designed N/P ratio is around 1.1. Celgard 2325 is used as the separator. 1M LiPF$_6$ in EC: EMC = 3:7 (vol%) (Gotion, USA) is denoted as baseline electrolyte. All the coin cells are assembled in the Ar-filled glovebox with moisture control (H$_2$O < 0.5 ppm), and 50 $\mu$L of electrolyte is used for each coin cell.

**C3) Performance evaluation**

After assembling, the coin cell (CR2032) is evaluated by cycling them at a rate of C/3 (where 1C is 147 mA/g) after two formation cycles at C/10. The electrochemical performances of all the cells are tested at room temperature either by Neware Battery Test System (Neware Technology Ltd., China) or Arbin BT2000 instruments (Arbin instrument, USA). Voltage range is 3.3 - 4.85 V.

The present invention is further illustrated in the following examples:

**Example 1**

EX1 was prepared according to the following steps:

1) Preparing lithium transition metal oxide having a spinel crystal structure (LNMO) according to:

a. Transition metal precursor preparation: A nickel-based transition metal powder having a metal composition Ni$_{0.5}$Mn$_{1.5}$ was prepared by a co-precipitation process in a large-scale continuous stirred tank reactor (CSTR) with mixed nickel manganese sulfates, sodium hydroxide, and ammonia.

b. Mixing the transition metal precursor with a lithium source to obtain first mixture having a molar ratio of lithium to metal (Ni + Mn) of 0.5.

c. Heating the first mixture at the temperature of 1055 °C in a flow of dry air followed by grinding to obtain a lithium transition metal oxide having a spinel crystal structure.

2) Dissolving 0.03 mol of Polyvinylpyrrolidone (PVP) (MW=50,000 g/mol) in 100 mL of Tetraethylene Glycol (TTEG) to obtain a second mixture.

3) Dissolving 0.015 mol of $LiOH \cdot H_2O$ into the second mixture followed by adding 0.015 mol $H_3BO_3$ to obtain a liquid mixture.

4) Heating the liquid mixture to 80 °C for 2 hours and cooling it to room temperature to obtain an intermediate product.

5) Washing the intermediate product with ethanol 7 times to obtain a washed intermediate product.

6) Drying the washed intermediate product at 80 °C for 24 hours followed by grinding to obtain a solid lithium boron oxide source powder.

7) Mixing lithium transition metal oxide prepared from Step 1) with the solid lithium boron oxide source powder using Thinky Mixer at 2000 rpm for 10 minutes in a weight ratio of 100 : 2 to obtain a third mixture.

8) Heating the third mixture at 600 °C for 10 hours followed by grinding after cooled down to obtain EX1 powder.

**Comparative Example 1**

CEX1 was prepared according to the following steps:

1) Preparing lithium transition metal oxide having a spinel crystal structure according to:

a. Transition metal precursor preparation: A nickel-based transition metal powder having a metal composition $Ni_{0.5}Mn_{1.5}$ was prepared by a co-precipitation process in a large-scale continuous stirred tank reactor (CSTR) with mixed nickel manganese sulfates, sodium hydroxide, and ammonia.

b. Mix the transition metal precursor with a lithium source to obtain first mixture having a molar ratio of lithium to metal (Ni + Mn) of 0.5.

c. Heating the first mixture at the temperature of 1055 °C in dry air followed by grinding to obtain a lithium transition metal oxide having a spinel crystal structure.

2) Mixing 1.259 grams of $LiOH \cdot H_2O$ with 3.710 grams of $H_3BO_3$ in ethanol to obtain a second mixture with a Li/B molar ratio (mol/mol) of 1:2.

3) Adding 10 grams of lithium transition metal oxide to the second mixture to obtain a third mixture.

4) Stirring the third mixture while heating at 80 °C until the solvent evaporated to obtain a fourth mixture.

5) Pressing the fourth mixture into pellets and heating at 500 °C for 10 hours followed by grinding after cooled down to obtain CEX1 powder.

**Comparative Example 2**

CEX2 was prepared according to the same method as CEX1, expect that the molar ratio of $LiOH \cdot H_2O$ and $H_3BO_3$ in Step 2 was 1:1 and heating temperature in Step 5) was 600 °C.

**Results**

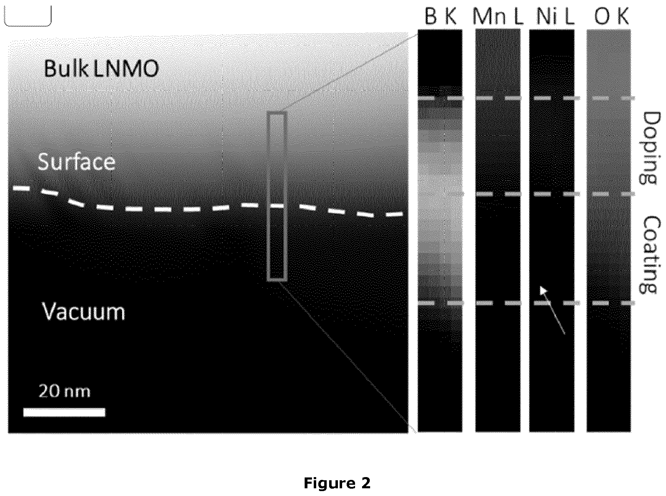

Figure 2 shows STEM-EELS mapping of the boron treated LNMO showing that for the surface part, the lithium boron oxide compound without Ni/Mn on the LNMO surface was proven, confirming that it was present on the surface of the LMNO.

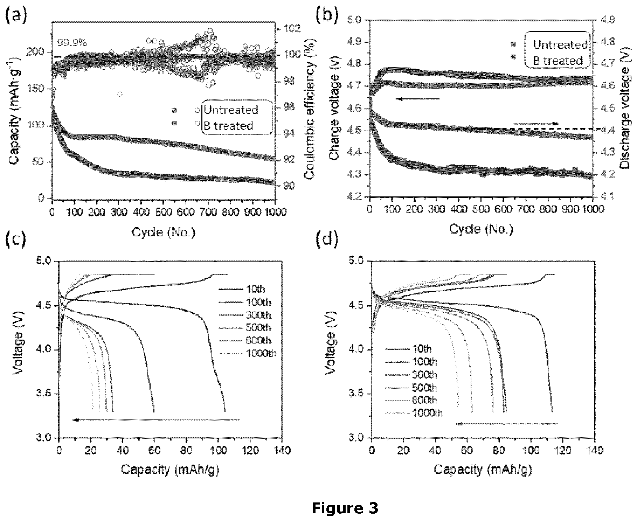

Figure 3 shows (a) full cells cycling performances wherein solid circles represent capacity values and open circles represent columbic efficiency values; (b) the corresponding average charge/discharge voltage; (c) the charge/-discharge profiles of different cycles from LNMO cells and (d) the charge/discharge profiles of different cycles from the boron treated LNMO cells. As shown in Figure 3 (a), the capacity retention after 1000 cycles (capacity after 1000 cycles / initial capacity) is 18.1% for the untreated LNMO and 46.1% for the boron treated LNMO. The untreated LNMO shows a steep cycle slope up to around 70 cycles in the beginning, followed by a large capacity drop in this interval and then an abrupt cycle degradation up to around 300 cycles. In contrast, the boron treated LNMO shows slower degradation at the beginning, followed by a stable cycle slope after 100 cycles and stable 99.9% coulombic efficiency. It can be inferred that side reaction with the electrolyte is minimized due to the lithium boron oxide compound present on the surface of the LMNO. Figure 3 (b) also shows that the boron treated LNMO has a more stable charge/discharge voltage from the beginning, demonstrating its improved performance. Figure 3 (c) and (d) show the charge-discharge profiles of untreated and the boron treated LNMO full cells. The charge plateau of untreated LNMO cells shifts to a higher voltage region while the discharge plateau shifts to a lower region, suggesting an increase in internal impedance, while both the charge and discharge capacity dropped quickly, which implies fast active lithium inventory loss. The charge and discharge plateau of the boron treated LNMO shift much less than the untreated sample, meaning the lithium boron oxide compound plays a significant role in controlling the internal impedance. As for the length of the constant voltage (CV) section at 4.85 V, the boron treated LNMO remained the same with the cycling, while the untreated LNMO CV section stretched from 100 cycles. This suggests that lithium from the positive electrode was not sufficiently de-intercalated during charging, resulting in low and unstable coulombic efficiency.

Table 2. Summary of the properties of EX1 and CEX1

| ID | ICP-MS result | | | XPS result | | XPS/ICP-MS ratio for B ($B_B/B_A$) | Coin cell | | |
|---|---|---|---|---|---|---|---|---|---|
| | Ni (at%) | Mn (at%) | B ($B_A$) (at%) | B peak (eV) | B ($B_B$) (at%) | | CQ1 (mAh/g) | DQ1 (mAh/g) | EF (%) |
| EX1 | 36.6 | 63.4 | 0.84 | 191.7 | 0.84 | 45.6 | 138.1 | 118.0 | 85.5 |
| CEX1 | 45.0 | 55.0 | 3.90 | 191.9 | 3.90 | 24.6 | 98.1 | 76.0 | 77.5 |
| CEX2 | 37.2 | 62.8 | 0.71 | 191.9 | 66.1 | 93.1 | 85.6 | 64.4 | 75.2 |

Table 2 summarizes the result of EX1, CEX1 and CEX2. In the XPS analysis, $B_B$ value higher than 0 indicates that B present on the surface of the positive electrode active material as associated with the XPS measurement which signal is acquired from the first few nanometers (e.g. 1 nm to 10 nm) of the uppermost part of a sample, i.e. surface layer. On the other hand, $B_A$ from ICP-MS measurement is the B content of the entire particle. Therefore, the ratio of XPS result to ICP-MS result such as $B_B/B_A$ higher than 1 indicates that said B is present mostly on the surface of the positive electrode active material.

**Claims**

1. A method for manufacturing a boron treated positive electrode active material, comprising the steps of:

    - Step 1) providing one or more precursors comprising

        a) a solid lithium boron oxide source, and/or
        b) a solid boron oxide source and a first lithium source;

    - Step 2) providing a positive electrode active material being a solid lithium transition metal oxide having a spinel crystal structure;
    - Step 3) solid-state mixing the one or more precursors of step 1) with the positive electrode active material of step 2);
    - Step 4) heating the mixture obtained in step 3) to obtain the boron treated positive electrode active material.

2. Method according to claim 1, wherein the one or more precursors comprise the solid lithium boron oxide source.

3. Method according to claim 2, wherein the solid lithium boron oxide source of step 1) is obtainable by the following the steps of

    ○ providing a second lithium source and a further boron source,
    ○ mixing a polymer, a first alcohol, the second lithium source and the further boron source to obtain a liquid mixture,
    ○ heating said liquid mixture at a temperature of at least 40 °C and at most 100 °C to obtain an intermediate product,
    ○ optionally washing the obtained intermediate product with a second alcohol to obtain a washed product,
    ○ drying and grinding the intermediate product or the washed product to obtain the solid lithium boron oxide source.

4. Method according to claim 3, wherein the polymer is polyvinylpyrrolidone

5. Method according to claim 3 or 4, wherein the first alcohol is a glycol, preferably tetraethylene glycol.

6. Method according to any one of claims 3-5, wherein the second lithium source is lithium hydroxide.

7. Method according to any one of claims 3-6, wherein the further boron source is boric acid.

8. Method according to any of claims 3-7, wherein the molar ratio of the amount of boron in the further boron source and the amount of lithium in the second lithium source is between 2:1 to 1:2, preferably about 1:1.

9. Method according to any one of claims 1-8, wherein the temperature in step 4) is at least 200 °C, preferably at least 400 °C, more preferably at least 500 °C.

10. Method according to any one of claims 1-9, wherein the time of heating in step 4) is in the range of 5 minutes to 48 hours, preferably within the range of 10 minutes to 24 hours, more preferably within the range of 30 minutes to 20 hours.

11. Method according to any one of claims 1-10, wherein the total amount of the one or more precursors mixed in step 3) is 0.1-10 wt.% by total weight of the solid lithium transition metal oxide mixed in step 3), preferably 0.5-5 wt.% by total weight of the solid lithium transition metal oxide mixed in step 3), more preferably 1-3 wt.% by total weight of the solid lithium transition metal oxide mixed in step 3).

12. A boron treated positive electrode active material having a spinel crystal structure obtainable by the method according to any one of claims 1-11, preferably according to the method according to any one of claims 3-11.

13. Positive electrode active material according to claim 12, comprising lithium, M', and oxygen wherein M' comprises:

- Ni in a content x', wherein $5.0 \leq x' < 60.0$ at%, relative to M',
- Mn in a content y', wherein $20.0 \leq y' \leq 90.0$ at%, relative to M',
- B in a content z', wherein $0.0 < z' \leq 10.0$ at%, relative to M',
- D in a content d', wherein $0.0 \leq d' \leq 2.0$ at%, relative to M', wherein D is at least one element selected from the group consisting of Al, Ba, Ca, Ce, Co, Cr, Fe, La, Mg, Mo, Nb, S, Sr, Ti, V, W, Y, Zn, and Zr;
- wherein x', y', z', and d' are measured by ICP-MS; and
- wherein $x'+y'+z'+d'$ is 100.0 at%.

14. A battery comprising the positive electrode active material according to claim 12 or 13.

15. Use of the battery according to claim 14 in an electric vehicle or in a hybrid electric vehicle.

EP 4 521 484 A1

**Figure 1**

16

**Figure 2**

EP 4 521 484 A1

Figure 3

18

# EUROPEAN SEARCH REPORT

Application Number

EP 23 19 5796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/270550 A1 (KAWASAKI TOMOOKI [JP] ET AL) 24 September 2015 (2015-09-24) * paragraph [0013] – paragraph [0093] * ----- | 1-15 | INV. H01M4/131 H01M4/505 H01M4/525 |
| X | JP 2012 116720 A (JGC CATALYSTS & CHEMICALS LTD) 21 June 2012 (2012-06-21) * paragraph [0056] – paragraph [0078] * ----- | 12,13 | |

TECHNICAL FIELDS SEARCHED (IPC)

H01M

The present search report has been drawn up for all claims

| Place of search | Date of completion of the search | Examiner |
|---|---|---|
| Munich | 26 January 2024 | Radeck, Stephanie |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons
........................................................................
& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 23 19 5796

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2024

| Patent document cited in search report | | Publication date | Patent family member(s) | | Publication date |
|---|---|---|---|---|---|
| US 2015270550 | A1 | 24-09-2015 | JP | 6350321 B2 | 04-07-2018 |
| | | | JP | 2015195177 A | 05-11-2015 |
| | | | US | 2015270550 A1 | 24-09-2015 |
| JP 2012116720 | A | 21-06-2012 | JP | 5435810 B2 | 05-03-2014 |
| | | | JP | 2012116720 A | 21-06-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **DU et al.** *RSC Adv.*, 2015, vol. 5, 57293-57299